# FASCICULE DE BREVET EUROPEEN

(11) **EP 3 256 266 B1**
(45) Date de publication et mention de la délivrance du brevet: **01.04.2020**
(21) Numéro de dépôt: 16707889.8
(22) Date de dépôt: 09.02.2016
(51) Int. Cl.: B06B 1/06, G01F 1/66, G01N 29/24, G10K 11/00

(54) **TRANSDUCTEUR ULTRASONORE, SON PROCÉDÉ DE MONTAGE ET DÉBITMÈTRE COMPRENANT AU MOINS UN TEL TRANSDUCTEUR**
ULTRASCHALLWANDLER, VERFAHREN ZUR MONTAGE DAVON UND STRÖMUNGSMESSER MIT MINDESTENS EINEM SOLCHEN WANDLER
ULTRASONIC TRANSDUCER, METHOD FOR ASSEMBLING SAME AND FLOWMETER COMPRISING AT LEAST ONE SUCH TRANSDUCER

(30) Priorité: 10.02.2015 FR 1551066
(43) Date de publication de la demande: 20.12.2017
(73) Titulaire: Integra Metering SAS, 31700 Blagnac (FR)
(72) Inventeur: ZEIDAN, Marwan, 82000 Montauban (FR); RAMOND, Alain, 31000 Toulouse (FR); MINKUS, Merlin, 31700 Blagnac (FR)
(74) Mandataire: Cabinet BARRE LAFORGUE & associés
(86) Numéro de dépôt international: PCT/FR2016/050289
(87) Numéro de publication internationale: WO 2016/128671

(56) Documents cités:
- WO-A1-2014/077836
- FR-A5- 2 063 324
- US-A- 2 972 068
- US-A- 4 030 175

## Description

L'invention concerne un transducteur ultrasonore pouvant être utilisé notamment pour la mesure d'un débit de fluide, en particulier de liquide. Elle s'étend à un procédé de fabrication d'un tel transducteur ultrasonore. Elle s'étend également à un débitmètre comprenant au moins un tel transducteur ultrasonore -notamment au moins deux transducteurs ultrasonores en vis-à-vis- dans un écoulement de fluide.

La mesure d'un temps de parcours d'une onde ultrasonore dans un fluide à l'aide d'au moins un transducteur ultrasonore permet d'en déduire le débit du fluide. Cependant, de nombreux facteurs sont susceptibles de perturber le trajet des ondes ultrasonores et donc de diminuer la précision de la mesure, voire de la fausser complétement. Tous les éléments de l'environnement proche du transducteur sont susceptibles de perturber les signaux reçus et entraînent des imprécisions provenant notamment de réflexions parasites et d'un faible rapport signal/bruit de l'empilement piézoélectrique.

En pratique, les signaux délivrés par les transducteurs ultrasonores connus dépendent considérablement de chaque application, et doivent faire l'objet d'un calibrage après chaque montage.

Il est connu de prévoir des épaisseurs de matériaux proportionnelles au quart de la longueur d'onde des ultrasons au sein de la plaquette piézoélectrique afin de réaliser une adaptation d'impédance et de limiter les réflexions parasites.

On connait de WO 2014/077836 un transducteur ultrasonore comprenant une pastille piézoélectrique et un plateau amortisseur disposé du côté de la face arrière de la pastille piézoélectrique, opposée à une face avant vibrante de la pastille piézoélectrique.

On connait aussi de US 4,030,175 un transducteur ultrasonore comprenant une pastille piézoélectrique et un plateau amortisseur disposé du côté de la face arrière de la pastille piézoélectrique, une électrode frontale au contact de la face frontale de la plaquette piézoélectrique et une électrode postérieure à l'arrière et au contact de la face arrière du plateau postérieur. Le transducteur comprenant aussi une coque externe remplie de résine synthétique où l'empilement piézoélectrique est inséré, à l'intérieur de la coque externe, la résine synthétique enveloppant l'empilement piézoélectrique.

On connait également de FR 2 063 324 un transducteur ultrasonore comprenant une pastille piézoélectrique et un amortisseur disposé du côté de la face arrière de la pastille piézoélectrique, opposée à une face avant vibrante de la pastille piézoélectrique, l'amortisseur ayant la forme d'un cylindre se terminant à l'une de ses extrémités par un cône, cette forme permettant d'amortir les ondes acoustiques rayonnées par la face arrière de la pastille piézoélectrique. L'amortisseur présente en outre une longueur très importante afin d'atténuer les ondes ultrasonores provenant de la face arrière de la pastille piézoélectrique, cette taille importante rendant l'utilisation d'un transducteur selon FR 2 063 324 incompatible avec des applications dans lesquelles l'encombrement spatial du transducteur ultrasonore doit être le plus réduit possible, notamment dans le cas de mesures de débit de fluide dans des canalisations.

Cependant malgré de telles précautions, les transducteurs ultrasonores connus ne procurent pas une fiabilité et une précision suffisantes de sorte que leur utilisation dans les usages courants, par exemple pour la mesure de débit de fluide dans les conduites ou canalisations d'adduction d'eau ou de rejet d'eaux usées est limitée. En outre, les transducteurs ultrasonores connus ont pour inconvénient d'être sensibles aux variations de température du fluide ce qui augmente encore les imprécisions de mesure. Le fait de prévoir, dans l'état de la technique, des épaisseurs de matériaux égales ou proportionnelles au quart de la longueur d'onde des ultrasons au sein de la plaquette piézoélectrique permet d'éviter dans une certaine mesure les réflexions parasites mais ne suffit pas à pallier les problèmes liés aux réflexions parasites notamment car celles-ci dépendent également de la température. Or, il n'est pas possible de modifier l'épaisseur des matériaux environnant la plaquette piézoélectrique lorsque la température varie.

L'invention vise donc à pallier ces inconvénients en proposant un transducteur ultrasonore présentant une précision et une fiabilité améliorées, notamment lors de variations de la température du fluide.

L'invention vise également plus particulièrement à proposer un transducteur ultrasonore présentant un rapport signal/bruit élevé et permettant une mesure du débit de fluide fiable.

L'invention vise également à proposer un transducteur ultrasonore présentant une précision, une fiabilité, une durée de vie et une résistance dans les environnements agressifs, en particulier dans les milieux liquides, suffisamment bonnes pour permettre son utilisation à des fins commerciales ou réglementaires.

L'invention vise à proposer un transducteur ultrasonore permettant de pallier le problème des réflexions parasites qui nuisent à la fiabilité de la mesure du débit de fluide.

L'invention vise également à proposer un transducteur ultrasonore présentant un faible encombrement, notamment un encombrement suffisamment faible pour permettre son immersion dans un écoulement de fluide avec une perturbation de l'écoulement suffisamment faible pour permettre l'utilisation du transducteur ultrasonore au sein de l'écoulement, par exemple pour une mesure de débit.

L'invention vise également à proposer un transducteur ultrasonore pouvant être fabriqué en grandes séries à des coûts compatibles avec son exploitation à l'échelle industrielle et avec une utilisation dans les usages courants, par exemple pour la mesure de débit dans les conduites ou canalisations d'adduction d'eau ou de rejet d'eaux usées.

L'invention vise également à proposer un procédé de fabrication d'un transducteur ultrasonore présentant les mêmes avantages. Elle vise donc en particulier à proposer un procédé de fabrication de faible coût et pouvant être mis en œuvre en grandes séries, dans des conditions compatibles avec son exploitation à l'échelle industrielle.

L'invention vise également à proposer un débitmètre comprenant au moins un transducteur ultrasonore, et qui soit de faible coût de fabrication et d'utilisation, tout en présentant une précision et une fiabilité améliorées, notamment lors de variations de la température du fluide.

Pour ce faire, l'invention concerne un transducteur ultrasonore selon la revendication 1 et comprenant :
- au moins une plaquette piézoélectrique présentant deux faces principales planes parallèles : une face frontale et une face postérieure,
- au moins un plateau postérieur présentant deux faces principales planes parallèles : une face antérieure et une face arrière, la face antérieure dudit plateau postérieur s'étendant en regard et au contact de la face postérieure de la plaquette piézoélectrique,
- le plateau postérieur présente une épaisseur comprise entre trois et sept fois l'épaisseur de la plaquette piézoélectrique,
- le plateau postérieur présente une impédance acoustique comprise entre 10MPa.s.m⁻¹ et 35MPa.s.m⁻¹.

Les inventeurs ont constaté qu'un tel transducteur dont le plateau postérieur présente une telle impédance acoustique et une épaisseur d'au moins trois fois celle de la plaquette piézoélectrique, et en particulier une épaisseur comprise entre trois et sept fois l'épaisseur de la plaquette piézoélectrique, permet de réaliser des mesures, notamment des mesures de débit de fluide, de grande précision et de grande fiabilité en émettant notamment des signaux dont les premières périodes sont stables et présentent une amplitude suffisamment importante et sont dénuées de signaux parasites. L'empilement piézoélectrique d'un transducteur selon l'invention qui comprend au moins ladite plaquette piézoélectrique et ledit plateau postérieur est tel qu'il permet de retarder les signaux parasites de façon à ce que les premiers signaux émis et/ou reçus par le transducteur soient de bonne qualité et représentatifs d'une mesure à effectuer, et ce notamment en régime transitoire. Ceci va totalement à l'encontre de l'enseignement des transducteurs connus dans lesquels un tel plateau postérieur présente une impédance acoustique très différente de celle du matériau formant la plaquette piézoélectrique afin de jouer un rôle d'écran ayant pour fonction d'absorber les ultrasons. Ainsi, contrairement à un transducteur selon l'état de la technique dans lequel on cherche à éviter les réflexions, un transducteur selon l'invention ne prétend pas pouvoir les éliminer totalement mais permet de faire en sorte que les réflexions ne perturbent pas la mesure à réaliser, par exemple la mesure d'un débit de fluide. Un transducteur selon l'invention est donc en particulier adapté pour pouvoir fonctionner en régime transitoire. En particulier le plateau postérieur présente une épaisseur comprise entre trois et sept fois l'épaisseur de la plaquette piézoélectrique, et plus particulièrement comprise entre trois et cinq fois l'épaisseur de la plaquette piézoélectrique, ce qui permet de procurer un transducteur ultrasonore dont les dimensions peuvent être réduites tout en permettant de réaliser des mesures, notamment des mesures de débit de fluide, de grande précision et de grande fiabilité en émettant notamment des signaux dont les premières périodes sont stables et présentent une amplitude suffisamment importante et sont dénuées de signaux parasites.

Ainsi, lorsqu'il fonctionne en mode émetteur, un transducteur selon l'invention permet d'émettre un signal dont les premières périodes sont dénuées de signaux parasites, un signal correspondant à un train d'ondes ou à une impulsion d'ondes ultrasonores. Un transducteur selon l'invention est tout aussi avantageux lorsqu'il fonctionne en mode récepteur, où il permet également de limiter les signaux parasites dans les premières périodes d'un signal reçu, à partir de signaux périodiques en émission. Un transducteur selon l'invention peut donc être un émetteur ou un récepteur ou les deux.

Grâce, d'une part, à une impédance acoustique lui permettant de transmettre les ondes ultrasonores provenant de la plaquette piézoélectrique et, d'autre part, à une épaisseur supérieure à trois fois celle de la plaquette piézoélectrique, le plateau postérieur permet de retarder les signaux parasites. Dans certaines variantes particulièrement avantageuses d'un transducteur selon l'invention, le plateau postérieur présente une épaisseur supérieure à quatre fois l'épaisseur de la plaquette piézoélectrique, et notamment comprise entre trois et sept fois l'épaisseur de la plaquette piézoélectrique et en particulier comprise entre quatre et sept fois l'épaisseur de la plaquette piézoélectrique. Plus particulièrement le plateau postérieur présente une épaisseur comprise entre trois et cinq fois l'épaisseur de la plaquette piézoélectrique, et notamment une épaisseur comprise entre trois et quatre fois l'épaisseur de la plaquette piézoélectrique.

Avantageusement et selon l'invention, le plateau postérieur présente une épaisseur supérieure à trois fois, notamment à quatre fois, l'épaisseur de la plaquette piézoélectrique. Avantageusement et selon l'invention, le plateau postérieur présente une épaisseur inférieure à sept fois, notamment à six, et en particulier à cinq fois l'épaisseur de la plaquette piézoélectrique.

En outre, un transducteur selon l'invention permet de réaliser des mesures, notamment des mesures de débit de fluide, précises et fiables quel que soit la température ou la variation de température au cours du temps. En particulier, un transducteur selon l'invention peut notamment être utilisé à des températures comprises entre 0°C et 150°C, et notamment entre 0°C et 100°C contrairement aux transducteurs de l'état de la technique. En effet, les variations de température n'affectent pas l'allure des signaux émis et/ou reçus par ledit transducteur dont l'amplitude des premières périodes reste stable.

Un transducteur selon l'invention permet donc de réaliser une mesure fiable et précise tout en simplifiant le traitement du signal afin d'en déduire par exemple le débit d'un fluide, ou en tout cas sans le rendre plus complexe.

Ainsi, au lieu de réfléchir les ultrasons au niveau de sa face antérieure, le plateau postérieur est formé d'au moins un matériau adapté pour transmettre les ondes ultrasonores provenant de la plaquette piézoélectrique. Avantageusement et selon l'invention, le plateau postérieur présente une impédance acoustique similaire à l'impédance acoustique de la plaquette piézoélectrique. Le plateau postérieur présente donc une impédance acoustique proche de celle de la plaquette piézoélectrique. L'impédance acoustique du plateau postérieur peut être sensiblement identique, légèrement supérieure ou légèrement inférieure, en valeur absolue, à l'impédance acoustique de la plaquette piézoélectrique. En particulier, avantageusement et selon l'invention, le plateau postérieur présente une impédance acoustique comprise entre 20MPa.s.m⁻¹ et 35MPa.s.m⁻¹, et notamment comprise entre 25MPa.s.m⁻¹ et 32MPa.s.m⁻¹, et par exemple de l'ordre de 30MPa.s.m⁻¹. De cette façon la propagation des ultrasons provenant de la plaquette piézoélectrique n'est pas réfléchie directement à l'interface entre la plaquette piézoélectrique et le plateau postérieur mais se poursuit au sein du plateau postérieur jusqu'à la face arrière du plateau postérieur sur laquelle les ultrasons sont réfléchis.

Avantageusement et selon l'invention, la plaquette piézoélectrique présente une impédance acoustique comprise entre 20MPa.s.m⁻¹ et 30MPa.s.m⁻¹, et en particulier de l'ordre de 25MPa.s.m⁻¹. La plaquette piézoélectrique est donc formée d'au moins un matériau présentant une impédance acoustique comprise entre 20MPa.s.m⁻¹ et 30MPa.s.m⁻¹, et en particulier de l'ordre de 25MPa.s.m⁻¹.

En particulier, avantageusement et selon l'invention, l'épaisseur de la plaquette piézoélectrique est inférieure à 2mm, et est notamment de l'ordre de 500µm, pour une fréquence de résonance de la plaquette piézoélectrique de 4MHz. Ainsi, avantageusement et selon l'invention, pour une fréquence de résonance de la plaquette piézoélectrique de 4MHz, l'épaisseur du plateau postérieur est comprise entre 1,5mm et 10mm, notamment entre 1,5mm et 5mm, et plus particulièrement entre 1,5mm et 4mm. En particulier, avantageusement l'épaisseur du plateau postérieur est comprise entre 1,5mm et 3,5mm, notamment comprise entre 1,5mm et 3mm, et plus particulièrement entrel,5mm et 2,5mm. Avantageusement l'épaisseur du plateau postérieur est encore comprise entre 2mm et 4mm, notamment comprise entre 2mm et 3,5mm, et plus particulièrement comprise entre 2mm et 3mm.

Un transducteur selon l'invention comprend également des éléments permettant de relier électriquement et par contact la face frontale de la plaquette piézoélectrique à l'extérieur du transducteur ainsi que la face arrière du plateau postérieur à l'extérieur du transducteur. Avantageusement et selon l'invention, un transducteur selon l'invention comprend :
- une électrode frontale à l'avant et au contact de la face frontale de la plaquette piézoélectrique, ladite électrode frontale étant électriquement reliée à l'extérieur du transducteur,
- une électrode postérieure à l'arrière et au contact de la face arrière du plateau postérieur, ladite électrode postérieure étant électriquement reliée à l'extérieur du transducteur.

Un transducteur selon l'invention comprend donc au moins une électrode frontale à l'avant et au contact de la face frontale de la plaquette piézoélectrique et une électrode postérieure à l'arrière et au contact de la face arrière du plateau postérieur, chaque électrode étant reliée directement ou indirectement à l'extérieur du transducteur. Un transducteur selon l'invention peut par exemple comprendre :
- une électrode frontale à l'avant et au contact de la face frontale de la plaquette piézoélectrique et une électrode postérieure à l'arrière et au contact de la face arrière du plateau postérieur,
- une liaison électrique de l'électrode frontale à l'extérieur du transducteur,
- une liaison électrique de l'électrode postérieure à l'extérieur du transducteur.

Le matériau formant le plateau postérieur est donc adapté pour permettre de réaliser un contact électrique postérieur à ladite plaquette piézoélectrique. Ceci a également pour avantage d'éviter d'avoir à ajouter un contact électrique à l'aide d'une électrode disposée entre la plaquette piézoélectrique et le plateau postérieur, qui serait susceptible de diminuer la qualité du contact entre la face postérieure de la plaquette piézoélectrique et la face antérieure du plateau postérieur. Toutefois, il est également possible de prévoir, en particulier dans le cas où le plateau postérieur ne serait pas formé d'un matériau électriquement conducteur ou dont la conductivité électrique serait insuffisante, qu'une électrode postérieure soit disposée à l'arrière et au contact d'au moins une partie de la face postérieure de la plaquette piézoélectrique.

Afin d'assurer un bon contact électrique entre la plaquette piézoélectrique et l'électrode frontale, un matériau adhésif peut être utilisé à leur interface. Avantageusement ledit matériau adhésif est choisi parmi les matériaux adhésifs (ou les colles) électriquement conductrices. Il peut par exemple s'agir d'une colle comprenant au moins un matériau polymère (par exemple une résine époxyde) dans lequel sont dispersées des particules métalliques électriquement conductrices. Un tel matériau adhésif est également disposé à l'arrière de la plaquette piézoélectrique, c'est-à-dire à l'interface entre la plaquette piézoélectrique et le plateau postérieur. Chaque couche de matériau adhésif est adaptée pour assurer une cohésion suffisante entre chaque élément de l'empilement piézoélectrique et pour ne pas perturber le trajet des ondes ultrasonores au sein de l'empilement piézoélectrique. Avantageusement chaque couche de matériau adhésif présente une épaisseur très faible par rapport à l'épaisseur de chacun des éléments de l'empilement piézoélectrique. Chaque couche de matériau adhésif présente par exemple une épaisseur de l'ordre de 10µm ou inférieure à 10µm.

Un transducteur selon l'invention comprend en outre une coque externe qui protège l'empilement piézoélectrique formé par l'électrode frontale, la plaquette piézoélectrique, le plateau postérieur et l'électrode postérieure.

Avantageusement ladite coque externe présente un espace interne recevant l'empilement piézoélectrique et un passage pour chaque liaison électrique de chaque électrode à l'extérieur de l'empilement piézoélectrique. Avantageusement, un transducteur selon l'invention est aussi caractérisé en ce que ladite coque externe présente une paroi frontale s'étendant à l'avant de l'électrode frontale et à l'avant de la face frontale de la plaquette piézoélectrique, cette paroi frontale présentant une portion amincie, dite fenêtre, superposée à l'avant et en regard de l'électrode frontale et de la face frontale de la plaquette piézoélectrique et traversée par les ultrasons émis ou reçus par la plaquette piézoélectrique. En pratique la fenêtre formée dans la coque externe est disposée de façon à ce que les ultrasons émis ou reçus par le transducteur, destinés à ladite mesure du débit de fluide, traversent ladite fenêtre sensiblement orthogonalement à ladite paroi frontale, ladite paroi frontale étant plane et parallèle à la face frontale de la plaquette piézoélectrique.

La coque externe enveloppe donc l'empilement piézoélectrique tout en laissant au moins un passage pour chaque conducteur électrique de liaison vers l'extérieur du transducteur.

Avantageusement chaque coque externe fait partie intégrante d'un tube dans lequel s'écoule un fluide dont on souhaite mesurer le débit. Dans ce cas, le tube et les coques externes de chaque transducteur sont formés d'une même et unique pièce et d'un même matériau. Ledit tube comprend alors au moins un logement interne adapté pour pouvoir recevoir ledit empilement piézoélectrique de façon à former au moins un transducteur selon l'invention. L'invention s'étend donc également à un débitmètre ainsi formé.

Avantageusement la coque externe est formée d'au moins un matériau choisi dans le groupe formé des matériaux polymères et des matériaux composites à matrice polymère. En particulier, avantageusement et selon l'invention ladite coque externe est formée d'un matériau polymère ou d'un matériau qui comprend une matrice polymère qui peut être thermoplastique ou thermodurcissable, par exemple avantageusement choisi dans le groupe formé du polyétherimide (PEI), du polyétheréthercétone (PEEK), du poly(sulfure de phénylène) (PPS), des polysulfones (PSU), des polyoléfines tels que le polyéthylènes (PE) et les polyesters (PET), des polystyrènes (PS), des poly(oxyde de phénylène) (PPO), des polyamides tels que le PA66, et de leurs mélanges tels que les Noryl®. D'autres matériaux sont possibles. Dans le cas où la coque externe est formée d'un matériau composite, la matrice polymère peut comprendre au moins un renfort sous forme de particules, de fibres ou encore de mats tissés ou non tissés Il peut par exemple s'agir de renforts choisi parmi les fibres de verre ou encore les fibres de carbone.

Ce matériau doit être choisi pour présenter à la fois une rigidité suffisante pour permettre sa manipulation lors du montage du transducteur et son utilisation au contact d'un fluide en mouvement, et une impédance acoustique adaptée pour permettre de transmettre les ultrasons.

La coque externe peut par exemple être fabriquée par moulage, notamment par injection, à faible coût.

De préférence, la coque externe est formée d'un matériau électriquement isolant. Rien n'empêche cependant également de prévoir que la coque externe soit formée d'un matériau électriquement conducteur, par exemple un polymère électriquement conducteur, de façon à former un blindage.

En outre, avantageusement et selon l'invention, une résine synthétique est disposée à l'intérieur de la coque externe de façon à remplir sensiblement tout l'espace libre laissé par l'empilement piézoélectrique disposé à l'intérieur de la coque externe. Une telle résine synthétique permet d'assurer un excellent maintien en position de l'empilement piézoélectrique.

Avantageusement la résine synthétique disposée dans l'espace interne de la coque externe est adaptée pour transmettre les ondes ultrasonores provenant de la plaquette piézoélectrique. Avantageusement et selon l'invention, la résine synthétique disposée dans l'espace interne de la coque externe est choisie dans le groupe formé des résines époxydes (ou "époxy").

Ainsi, dans un mode de réalisation particulièrement avantageux d'un transducteur selon l'invention, une résine synthétique présentant une épaisseur supérieure ou égale à la moitié de l'épaisseur de la plaquette piézoélectrique est disposée entre la plaquette piézoélectrique et la face interne de la fenêtre de la coque externe. La résine synthétique est donc disposée entre la plaquette piézoélectrique et la fenêtre de la coque externe en étant au contact, d'une part, de la face frontale de la plaquette piézoélectrique et, d'autre part, de la face interne de la fenêtre de la coque externe.

Les inventeurs ont constaté qu'une telle épaisseur de résine entre la plaquette piézoélectrique et la fenêtre de la coque externe permet également d'améliorer la précision et la fiabilité des mesures, notamment de mesures de débit de fluide, en retardant fortement les réflexions parasites des ondes ultrasonores au sein de ladite couche de résine, ce qui permet de diminuer, voire d'éliminer totalement, leur impact négatif sur la mesure du débit de fluide. Une telle épaisseur de résine entre la plaquette piézoélectrique et la fenêtre de la coque externe est en particulier supérieure au quart de la longueur d'onde des ultrasons au sein de la plaquette piézoélectrique.

Avantageusement la couche de résine synthétique disposée entre la plaquette piézoélectrique et la fenêtre de la coque externe présente une épaisseur supérieure à 200µm, notamment de l'ordre de 300µm. L'épaisseur de la couche adhésive disposée entre la plaquette piézoélectrique et l'électrode frontale est en particulier comprise entre 180µm et 2mm, notamment entre 200µm et 1,5mm.

Dans tout le texte, l'expression "au moins sensiblement" indique, de façon habituelle, qu'une caractéristique structurelle ou fonctionnelle ne doit pas être prise comme absolue, mais couvre non seulement cette structure ou cette fonction, mais également des variations légères de cette structure ou de cette fonction qui produisent, dans le contexte technique considéré, un effet de même nature, sinon de même degré.

Avantageusement la plaquette piézoélectrique présente un contour symétrique par rapport à un centre de ce contour. Avantageusement et selon l'invention, ladite paroi frontale de la coque externe présente un contour au moins sensiblement symétrique par rapport au centre de la plaquette piézoélectrique.

En outre, avantageusement ladite fenêtre présente un format correspondant au moins sensiblement à celui de la plaquette piézoélectrique.

Par ailleurs, avantageusement ladite portion de la paroi frontale formant ladite fenêtre présente une épaisseur comprise entre 0,5mm et 2mm, notamment de l'ordre de 1mm. De même que pour l'épaisseur de la résine disposée entre la plaquette piézoélectrique et ladite fenêtre, les inventeurs ont constaté qu'une telle épaisseur de la paroi frontale formant ladite fenêtre permet également d'améliorer la précision et la fiabilité des mesures, notamment de mesures de débit de fluide, en retardant fortement les réflexions parasites des ondes ultrasonores au sein de l'épaisseur de ladite fenêtre, ce qui permet de diminuer, voire d'éliminer totalement, leur impact négatif sur la mesure.

La plaquette piézoélectrique peut être utilisée dans son mode de résonance radiale ou dans son mode de résonance en épaisseur. Cependant, dans un mode de réalisation particulièrement avantageux d'un transducteur selon l'invention, la plaquette piézoélectrique est exploitée en mode de résonance en épaisseur.

Avantageusement la plaquette piézoélectrique présente un contour polygonal -notamment carré ou rectangulaire-. Cependant, rien n'empêche également d'utiliser une plaquette piézoélectrique présentant un contour sensiblement circulaire.

Les inventeurs ont constaté avec surprise qu'une plaquette piézoélectrique polygonale présente un coût réduit et des performances aussi bonnes que les plaquettes piézoélectriques en forme générale de disque couramment utilisées dans l'état de la technique antérieure en ce qui concerne l'émission et la détection des ultrasons.

En particulier, avantageusement la plaquette piézoélectrique présente une épaisseur inférieure à ses dimensions radiales (dans toute direction orthogonale à son épaisseur), notamment une épaisseur inférieure à 1mm et des dimensions radiales inférieures à 12mm dans toute direction orthogonale à son épaisseur. La plaquette piézoélectrique peut par exemple présenter une épaisseur de l'ordre de 0,5mm et des dimensions radiales de la forme d'un carré de 3mm de côté, de 5mm de côté, de 7 mm de côté ou encore de 10mm de côté.

Ainsi, la plaquette piézoélectrique est une pastille de faibles dimensions, et présente une fréquence de résonance (mode propre) qui est typiquement comprise entre 500 kHz et 10 MHz, notamment de l'ordre de 4 MHz.

L'invention s'étend à un procédé de montage d'un transducteur selon l'invention. Elle concerne donc un procédé de montage d'un transducteur ultrasonore selon la revendication 10, dans lequel :
- on réalise au moins un empilement piézoélectrique comportant :
   - au moins une plaquette piézoélectrique présentant deux faces principales planes parallèles : une face frontale et une face postérieure,
   - au moins un plateau postérieur présentant deux faces principales planes parallèles : une face antérieure et une face arrière, la face antérieure dudit plateau postérieur s'étendant en regard et au contact de la face postérieure de la plaquette piézoélectrique,
   - une électrode frontale à l'avant et au contact de la face frontale de la plaquette piézoélectrique, ladite électrode frontale étant électriquement reliée à l'extérieur du transducteur,
   - une électrode postérieure à l'arrière et au contact de la face arrière du plateau postérieur, ladite électrode postérieure étant électriquement reliée à l'extérieur du transducteur,
- on dispose une résine synthétique liquide dans l'espace interne d'une coque externe présentant une paroi frontale s'étendant à l'avant de l'électrode frontale et à l'avant de la face frontale de la plaquette piézoélectrique, cette paroi frontale présentant une portion amincie, dite fenêtre, superposée à l'avant et en regard de l'électrode frontale et de la face frontale de la plaquette piézoélectrique,
- après avoir disposé ladite résine synthétique liquide dans la coque externe, on insère ledit empilement piézoélectrique à l'intérieur de ladite coque externe remplie de ladite résine synthétique, ladite résine synthétique enveloppant ledit empilement piézoélectrique de façon à ce que, après solidification de la résine synthétique, les électrodes, la plaquette piézoélectrique et le plateau postérieur sont maintenus en position et en contact mécanique et électrique les uns avec les autres,
- le plateau postérieur présente une épaisseur comprise entre trois et sept fois l'épaisseur de la plaquette piézoélectrique,
- le plateau postérieur présente une impédance acoustique comprise entre 10MPa.s.m⁻¹ et 35MPa.s.m⁻¹.

Un transducteur selon l'invention ne nécessite pas de plots de maintien pour maintenir en place la plaquette piézoélectrique, ni l'ensemble de l'empilement piézoélectrique.

En outre, l'encombrement d'un transducteur selon l'invention permet son montage directement dans un écoulement de fluide, son architecture n'induisant pas de pertes importantes dans la mesure.

Avantageusement et selon l'invention, après avoir disposé ledit empilement piézoélectrique à l'intérieur de ladite coque externe, on réalise une étape de polymérisation de la résine synthétique liquide, de façon à solidifier ladite résine synthétique. Pour ce faire, on soumet le transducteur à une étape de traitement thermique par exemple dans un four ou on laisse polymériser la résine synthétique à température ambiante si la nature de celle-ci le permet, et ce pendant une durée prédéterminée permettant d'atteindre une solidification suffisante de la résine pour assurer un maintien en position de l'empilement piézoélectrique.

Une fois polymérisée, la résine polymère disposée à l'intérieur de la coque externe permet de maintenir les électrodes, la plaquette piézoélectrique et le plateau postérieur en contact mécanique et électrique les uns des autres. Elle permet également d'assurer l'étanchéité autour de l'empilement piézoélectrique.

Avantageusement on propose un procédé de montage d'un transducteur ultrasonore dans lequel :
- on réalise au moins un empilement piézoélectrique comportant :
   - au moins une plaquette piézoélectrique présentant deux faces principales planes parallèles : une face frontale et une face postérieure,
   - au moins un plateau postérieur présentant deux faces principales planes parallèles : une face antérieure et une face arrière, la face antérieure dudit plateau postérieur s'étendant en regard et au contact de la face postérieure de la plaquette piézoélectrique,
   - une électrode frontale à l'avant et au contact de la face frontale de la plaquette piézoélectrique, ladite électrode frontale étant électriquement reliée à l'extérieur du transducteur,
   - une électrode postérieure à l'arrière et au contact de la face arrière du plateau postérieur, ladite électrode postérieure étant électriquement reliée à l'extérieur du transducteur,
caractérisé en ce que :
- on dispose une résine synthétique liquide dans l'espace interne d'une coque externe présentant une paroi frontale s'étendant à l'avant de l'électrode frontale et à l'avant de la face frontale de la plaquette piézoélectrique, cette paroi frontale présentant une portion amincie, dite fenêtre, superposée à l'avant et en regard de l'électrode frontale et de la face frontale de la plaquette piézoélectrique,
- après avoir disposé ladite résine synthétique liquide dans la coque externe, on insère ledit empilement piézoélectrique à l'intérieur de ladite coque externe remplie de ladite résine synthétique, ladite résine synthétique enveloppant ledit empilement piézoélectrique de façon à ce que, après solidification de la résine synthétique, les électrodes, la plaquette piézoélectrique et le plateau postérieur sont maintenus en position et en contact mécanique et électrique les uns avec les autres, et en ce que :
- la résine synthétique disposée entre la plaquette piézoélectrique et la face interne de la fenêtre de la coque externe, au contact de la face frontale de la plaquette piézoélectrique et de la face interne de la fenêtre de la coque externe, présente une épaisseur supérieure ou égale à la moitié de l'épaisseur de la plaquette piézoélectrique.

L'invention s'étend à un débitmètre comprenant au moins un transducteur ultrasonore -notamment deux transducteurs ultrasonores en vis-à-vis-dans un écoulement de fluide caractérisé en ce que chaque transducteur ultrasonore est un transducteur selon l'invention. Un débitmètre selon l'invention peut être avantageusement constitué d'une portion de conduite dans laquelle est insérée au moins un transducteur ultrasonore selon l'invention dans une position adaptée pour permettre le passage du fluide autour du transducteur ultrasonore. En particulier, avantageusement et selon l'invention, chaque transducteur peut être monté par rapport à la conduite de façon à s'étendre au moins sensiblement orthogonalement à la direction longitudinale de la conduite, et de l'écoulement de fluide dans cette dernière. Le faible encombrement, notamment en largeur, d'un transducteur selon l'invention entraîne une très faible part de perturbation de l'écoulement par ce dernier.

D'autres buts, caractéristiques et avantages de l'invention apparaissent à la lecture de la description suivante d'un de ses modes de réalisation préférentielle donnée à titre d'exemple non limitatif, et qui se réfère aux figures annexées dans lesquelles :
- la figure 1 est une vue schématique en perspective d'un transducteur selon un mode de réalisation de l'invention,
- la figure 2a est une vue schématique en coupe d'un transducteur selon un mode de réalisation de l'invention, la figure 2b étant un détail de la figure 2a,
- la figure 3 est une vue schématique en coupe d'un transducteur selon un mode de réalisation de l'invention,
- la figure 4 est une vue schématique en perspective d'une étape du procédé de montage d'un transducteur selon un mode de réalisation de l'invention,
- la figure 5 est une vue schématique en coupe axiale d'un débitmètre selon un mode de réalisation de l'invention,
- les figures 6 et 7 représentent des signaux de mesure provenant d'un transducteur selon un mode de réalisation de l'invention.

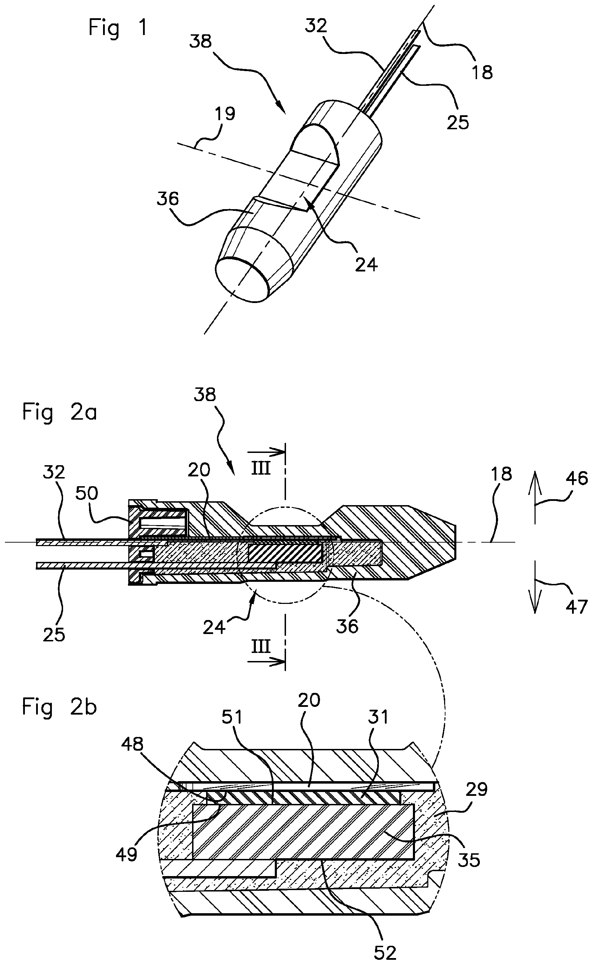

Un transducteur ultrasonore 38 selon l'invention, représenté sur les figures 1 et 2a, présente une forme allongée en longueur suivant une direction longitudinale 18. Il s'étend aussi en largeur suivant une direction, dite direction transversale 19, orthogonale et sécante à la direction longitudinale 18.

Le transducteur 38 comprend au moins une plaquette piézoélectrique 31, et de préférence une seule plaquette piézoélectrique 31. Elle présente deux faces principales planes parallèles : une face frontale 48 (définissant l'avant de la plaquette piézoélectrique 31 et du transducteur) et une face postérieure 49 (définissant l'arrière de la plaquette piézoélectrique 31 et du transducteur). Ces deux faces principales s'étendent selon des plans parallèles à la direction longitudinale 18 et à la direction transversale 19.

Une électrode frontale 20 est disposée à l'avant et au contact de la face frontale 48 de la plaquette piézoélectrique 31. Une électrode postérieure 25 est disposée à l'arrière et au contact de la face arrière 52 du plateau postérieur 35.

L'électrode frontale 20 est électriquement reliée à l'extérieur du transducteur par l'intermédiaire d'une baguette conductrice frontale 32 alors que l'électrode postérieure 25 est formée d'une baguette conductrice postérieure et est directement reliée à l'extérieur du transducteur.

L'électrode frontale 20, la plaquette piézoélectrique 31, le plateau postérieur 35 et l'électrode postérieure 25 forment un empilement piézoélectrique. Cet empilement piézoélectrique est réalisé selon une direction, dite antéropostérieure, correspondant à une épaisseur, qui s'étend dans une direction orthogonale et sécante aux directions longitudinale 18 et transversale 19. La direction antéropostérieure définit une orientation antérieure 47 (vers l'avant) et une orientation postérieure 46 (vers l'arrière).

Le transducteur 38 comprend en outre une coque externe 36 qui protège l'empilement piézoélectrique formé par l'électrode frontale, la plaquette piézoélectrique, le plateau postérieur et l'électrode postérieure. La coque externe 36 présente un espace interne recevant l'empilement piézoélectrique et un passage pour chaque conducteur électrique à l'extérieur de l'empilement piézoélectrique. La coque externe 36 présente une paroi frontale s'étendant à l'avant de l'électrode frontale et à l'avant de la face frontale de la plaquette piézoélectrique, cette paroi frontale présentant une portion amincie, dite fenêtre 24, superposée à l'avant et en regard de l'électrode frontale et de la face frontale de la plaquette piézoélectrique. Les ultrasons émis ou reçus par le transducteur, destinés à ladite mesure du débit de fluide, traversent la fenêtre 24 sensiblement orthogonalement à la paroi frontale, ladite paroi frontale étant plane et parallèle à la face frontale de la plaquette piézoélectrique 31.

La coque externe 36 est formée d'un matériau synthétique rigide choisi dans le groupe formé des matériaux polymères et des matériaux composites à matrice polymère. Ce matériau polymère (ou la matrice polymère, le cas échéant) est avantageusement choisi dans le groupe des matériaux thermoplastiques et des matériaux thermodurcissables, et notamment dans le groupe formé du polyétherimide (PEI), du polyétheréthercétone (PEEK), du poly(sulfure de phénylène) (PPS), des polysulfones (PSU), des polyoléfines tels que le polyéthylènes (PE) et les polyesters (PET), des polystyrènes (PS), des poly(oxyde de phénylène) (PPO), des polyamides tels que le PA66, et de leurs mélanges tels que les Noryl®. Dans un mode de réalisation particulièrement avantageux d'un transducteur selon l'invention, la coque externe 36 est formée d'un polyétherimide (PEI) commercialisé sous la référence ULTEM® par la société Sabic (Riyadh, Arabie Saoudite) et comprenant 20% en poids de fibre de verre. De la sorte, la coque externe peut être formée d'une pièce moulée, par exemple par injection.

Une couche adhésive (non représentée) est disposée entre la plaquette piézoélectrique 31 et l'électrode frontale 20 ainsi qu'entre la plaquette piézoélectrique 31 et le plateau postérieur 35 de façon à assurer un bon contact électrique entre chacun des éléments de l'empilement piézoélectrique.

Avantageusement ladite couche adhésive est choisie parmi les matériaux adhésifs (ou les colles) électriquement conductrices. Il s'agit par exemple d'une colle comprenant au moins un matériau polymère de type résine époxyde, dans laquelle sont dispersées des particules métalliques électriquement conductrices. Chaque couche de matériau adhésif présente une épaisseur très faible par rapport à l'épaisseur de chacun des éléments de l'empilement piézoélectrique. Chaque couche adhésive présente par exemple une épaisseur de l'ordre de 10µm.

Une résine synthétique est disposée à l'intérieur de la coque externe de façon à remplir sensiblement tout l'espace libre laissé par l'empilement piézoélectrique disposé à l'intérieur de la coque externe. Elle permet de maintenir en position l'empilement piézoélectrique. Elle est également adaptée pour transmettre les ondes ultrasonores provenant de la plaquette piézoélectrique vers un milieu dans lequel est disposé le transducteur, tel que de l'eau et qui présente une impédance acoustique bien moindre que celle de la plaquette piézoélectrique. La couche de résine synthétique constitue donc également une couche d'adaptation d'impédance entre le matériau piézoélectrique formant la plaquette piézoélectrique et le matériau formant la fenêtre de la coque externe puis l'eau. La résine disposée dans l'espace interne de la coque externe est choisie dans le groupe formé des résines époxydes (ou "époxy").

D'autre part, de façon à optimiser encore la fiabilité et la précision de la mesure, par exemple la mesure d'un débit de fluide, la résine synthétique disposée entre la plaquette piézoélectrique et la face interne de la fenêtre de la coque externe présente une épaisseur supérieure ou égale à la moitié de l'épaisseur de la plaquette piézoélectrique. Ceci permet également de retarder les signaux parasites liés aux réflexions des ondes ultrasonores vers l'avant de la plaquette piézoélectrique 31.

La face frontale 48 de la plaquette piézoélectrique 31 est en contact avec l'une desdites électrodes, l'électrode frontale 20. La face arrière 52 du plateau postérieur 35 est en contact avec l'autre desdites électrodes, l'électrode postérieure 25, la face postérieure 49 de la plaquette piézoélectrique 31 étant en contact avec la face antérieure 51 du plateau postérieur 35. Ces quatre pièces forment ainsi l'empilement piézoélectrique. Les électrodes 20, 25 reçoivent des signaux électriques (par l'intermédiaire de la baguette 32 pour l'électrode 20) et transmettent ces signaux à la plaquette piézoélectrique 31. Cette dernière émet, sous l'effet du champ électrique, une contrainte mécanique sous forme d'ondes ultrasonores. Ce premier effet caractérise une commande du transducteur 38 en mode émetteur. Réciproquement, si la plaquette piézoélectrique 31 capte une contrainte mécanique par exemple sous forme d'ondes ultrasonores, elle se polarise électriquement et transmet ainsi des signaux électriques aux électrodes 20, 25. Ce second effet caractérise une mesure faite par le transducteur 38 en mode récepteur.

Dans un transducteur 38 selon l'invention, la plaquette piézoélectrique 31 peut présenter une épaisseur inférieure à 2mm et des dimensions comprises entre 3mm et 10mm dans toutes les directions orthogonales à son épaisseur.

La plaquette piézoélectrique 31 présente avantageusement un contour polygonal, notamment carré ou rectangulaire, ou en forme générale de disque. La plaquette piézoélectrique 31 est utilisée dans son mode de résonance en épaisseur.

La plaquette piézoélectrique 31 est constituée d'un matériau piézoélectrique. Ce matériau piézoélectrique doit pouvoir émettre et recevoir des signaux ultrasonores et notamment à une fréquence de l'ordre de 4MHz. Ce matériau est par exemple une céramique piézoélectrique telle que les titano-zirconates de plomb (PZT). Rien n'empêche d'utiliser d'autres matériaux piézoélectriques tels que des monocristaux.

Le plateau postérieur 35 présente deux faces principales planes parallèles : une face antérieure 51 et une face arrière 52. La face antérieure 51 du plateau postérieur s'étend en regard et au contact de la face postérieure 49 de la plaquette piézoélectrique 31. Le plateau postérieur 35 présente des dimensions telles que sa face antérieure 51 est en contact au moins avec la portion de surface utile de la face postérieure 49 de la plaquette piézoélectrique 31 se trouvant en regard de la fenêtre 24, c'est-à-dire au moins en contact avec la portion de surface de la face postérieure 49 de la plaquette piézoélectrique 31 par laquelle passe au moins un chemin acoustique utile à la mesure de débit de fluide du transducteur. Dans le mode de réalisation représenté aux figures 1 à 4, le plateau postérieur 35 présente des dimensions telles que sa face antérieure 51 est au moins en contact avec la partie de la face postérieure 49 de la plaquette piézoélectrique 31 se trouvant en regard de la fenêtre 24. De préférence, comme dans le mode de réalisation représenté, le plateau postérieur 35 est tel qu'il présente des dimensions radiales supérieures ou égales aux dimensions radiales de la plaquette piézoélectrique 31. De cette façon, la face antérieure 51 du plateau postérieur 35 est dans sa totalité en contact avec la face postérieure 49 de la plaquette piézoélectrique 31.

Le plateau postérieur 35 s'étend longitudinalement et transversalement à l'intérieur de ladite coque externe 36. Ce plateau postérieur 35 est formé d'un matériau adapté pour transmettre les ondes ultrasonores. Par exemple, le plateau postérieur 35 est formé d'un matériau présentant une impédance acoustique comprise entre 10MPa.s.m⁻¹ et 35MPa.s.m⁻¹, notamment comprise entre 25MPa.s.m⁻¹ et 32MPa.s.m⁻¹. Le plateau postérieur 35 peut être formé d'un matériau présentant une telle impédance et choisi parmi les matériaux métalliques, tels que les alliages de cuivre et d'étain ou de cuivre et d'aluminium, les matériaux céramiques comprenant des particules métalliques, et les matériaux polymères thermoplastiques ou thermodurcissables comprenant des particules métalliques. Il peut par exemple s'agir de CuSn8 ou d'une résine époxy comprenant des particules de tungstène ou d'une résine époxy comprenant des fibres de verre (tel que le FR-4®). D'autres matériaux sont possibles. Le plateau postérieur 35 présente en outre une épaisseur supérieure à trois fois l'épaisseur de la plaquette piézoélectrique et en particulier comprise entre trois et cinq fois l'épaisseur de la plaquette piézoélectrique. De cette manière les ondes ultrasonores émises par la plaquette piézoélectrique 31 sont transmises au sein du plateau postérieur 35 dans la direction postérieure 46 du transducteur 38 jusqu'à la face arrière du plateau postérieur 35 et sont réfléchies sur celle-ci dans la direction frontale 47 jusqu'à la face postérieure 49 de la plaquette piézoélectrique 31.

Ceci permet de réaliser des mesures, notamment des mesures de débit de fluide, de grande précision et de grande fiabilité en obtenant notamment des signaux en réception dont les premières périodes sont dénuées de signaux parasites et présentent une amplitude suffisante pour permettre une mesure de fluide efficace. Il semble en effet que les signaux parasites sont retardés de façon à ce que les premières périodes du signal émis et/ou reçu soient de bonne qualité et représentatives de la mesure de parcours à effectuer. En pratique, les trois ou quatre premières périodes sont dénuées de signaux parasites et correspondent à un maximum d'énergie ce qui permet d'en déduire une mesure, notamment une mesure de débit de fluide, précise et fiable. En outre, les signaux parasites ne sont pas seulement retardés : il est également nécessaire que ceux-ci aient disparus avant la réception du signal qui correspond au train d'ondes (impulsion) suivant(e).

Dans un exemple de réalisation, un transducteur selon l'invention comprend une plaquette piézoélectrique 31 dont l'épaisseur est de 500µm, pour une fréquence de résonance de la plaquette piézoélectrique de 4MHz, et un plateau postérieur 35 dont l'épaisseur est de 2,25mm.

L'électrode 20 s'étend longitudinalement et transversalement de telle sorte qu'elle recouvre respectivement au moins une partie de la plaquette piézoélectrique 31.

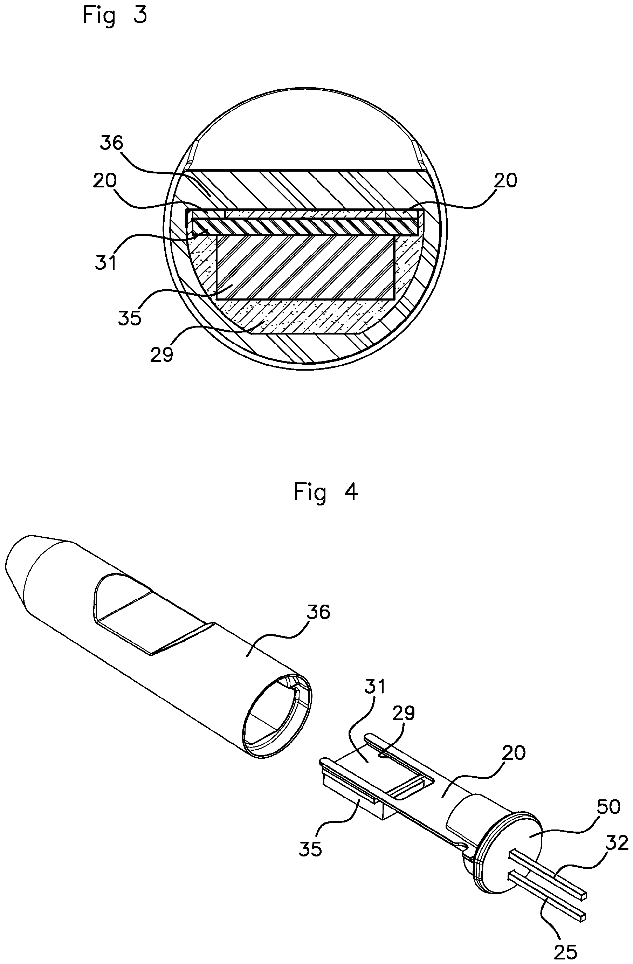

Comme on peut le voir sur les figures 3 et 4, l'électrode frontale 20 en contact avec la face frontale 48 de la plaquette piézoélectrique 31, présente une forme globalement rectangulaire dont une première portion proximale est pleine et une autre portion distale est partiellement évidée de façon à présenter une forme de fourche comportant deux branches latérales à son extrémité distale qui est disposée au fond de la coque externe 36. Les deux branches latérales de l'électrode frontale 20 sont en contact avec la face frontale 48 de la plaquette piézoélectrique 31. L'épaisseur desdites branches latérales de l'électrode frontale 20 est importante et détermine l'épaisseur de la résine synthétique qui sera présente entre la plaquette piézoélectrique et la face interne de la fenêtre de la coque externe. Dans le mode de réalisation particulièrement avantageux représenté cette couche de résine synthétique présente une épaisseur supérieure ou égale à la moitié de l'épaisseur de la plaquette piézoélectrique. Si l'épaisseur de la plaquette piézoélectrique est par exemple de 500µm, l'épaisseur de cette couche de résine synthétique est par exemple de l'ordre de 300µm. Les branches latérales de l'électrode frontale 20 doivent donc également présenter une épaisseur de 300µm.

Une telle électrode 20 assure non seulement un maintien latéral de la plaquette piézoélectrique 31 mais, grâce à ses deux branches latérales, permet également de former une butée longitudinale à l'intérieur de la coque externe 36, chacune des extrémités des deux branches latérales de l'électrode 20 étant adaptées pour venir en contact d'une surface interne de la coque externe 36. Ceci permet d'assurer un excellent maintien en position de l'empilement piézoélectrique les branches latérales de l'électrode 20 formant chacune une butée mécanique et permettant simultanément un contrôle de positionnement par rapport à la fenêtre de la coque externe, lors de la mise en place de l'empilement piézoélectrique. La stabilité de l'empilement piézoélectrique dans la direction antéropostérieure est également assurée par la présence de deux rainures longitudinales à l'intérieur de la coque externe et dans lesquelles les deux branches latérales de l'électrode 20 coulissent.

En outre, la forme de l'électrode 20 avec ses deux branches latérales permet de minimiser la surface de contact avec la face frontale 48 de la plaquette piézoélectrique 31 afin d'éviter de perturber les ondes ultrasonores émises par la plaquette piézoélectrique 31.

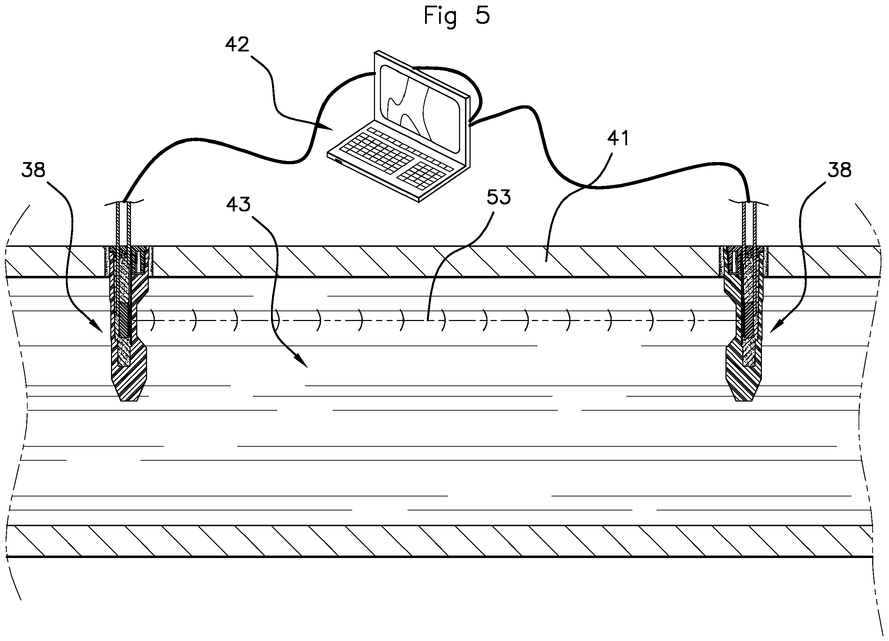

L'électrode frontale 20 et les baguettes 32 et 25, la baguette postérieure 25 formant l'électrode postérieure, permettent une connexion électrique entre l'empilement piézoélectrique et un dispositif de contrôle externe tel qu'un système de traitement de données, notamment un système informatique 42 (figure 5) et/ou un circuit électronique. Ces éléments permettent de transmettre des signaux électriques de mesure de l'empilement piézoélectrique 21 vers le système informatique 42 ; et réciproquement des signaux de commande du système informatique 42 vers l'empilement piézoélectrique 21.

Dans le transducteur selon le mode de réalisation représenté aux figures 1 à 4, la baguette frontale 32 prolonge l'électrode frontale 20 et l'électrode postérieure 25 se prolonge jusqu'à l'extérieur de la coque externe.

L'électrode frontale 20 et la baguette frontale 32 peuvent être formées d'un même matériau électriquement conducteur.

Chaque baguette 25, 32 est formée d'un matériau électriquement conducteur. Les baguettes 25, 32 s'étendent longitudinalement et transversalement à l'intérieur de ladite coque externe 36 et à l'extérieur de la coque externe 36 à travers un bouchon 50 assurant la fermeture de la coque externe 36.

La coque externe 36 présente au moins une fenêtre 24 agencée à l'avant et en regard de l'empilement piézoélectrique 21. Ladite fenêtre 24 est avantageusement formée en creux par rapport à une face frontale de la coque externe 36. L'épaisseur de la coque externe 36 au niveau de ladite fenêtre 24 est avantageusement comprise entre 0,5mm et 2mm, et est par exemple de 1mm. De plus, la fenêtre 24 présente une forme et un format qui correspondent au moins sensiblement à la forme et au format de la plaquette piézoélectrique 31 et de l'empilement piézoélectrique.

Les ondes ultrasonores ne sont donc pas sensiblement perturbées par le passage à travers la coque externe 36 à travers la fenêtre 24, c'est-à-dire que l'épaisseur de la fenêtre 24 permet de retarder les réflexions secondaires au sein de celle-ci, sans trop atténuer toutefois les ondes ultrasonores la traversant.

Un transducteur 38 selon l'invention peut en particulier être utilisé pour former un débitmètre selon l'invention comme représenté figure 5. Ce débitmètre comprend au moins un transducteur 38 ultrasonore selon l'invention et un système informatique 42. De préférence, le débitmètre comprend deux transducteurs 38 placés en regard l'un de l'autre avec les fenêtres 24 en vis-à-vis.

Le débitmètre comprend un tube 41 dans lequel s'écoule un fluide 43 selon une direction au moins sensiblement normale aux fenêtres 24 des transducteurs 38.

Chaque transducteur 38 est fixé au tube 41 par insertion dans un trou traversant la paroi de ce dernier. Les transducteurs 38 s'étendent orthogonalement à la direction longitudinale du tube 41. Les transducteurs 38 sont maintenus rigidement en position, par exemple par collage permettant aussi l'étanchéité du tube 41 et du débitmètre ou encore à l'aide d'une plaquette disposée au-dessus de chaque transducteur et en exerçant une pression sur chacun d'eux afin de les maintenir en place.

Un débitmètre selon l'invention peut comprendre un nombre de transducteurs 38, et donc de trous de réception dans le tube 41, différents de deux. De plus, rien n'empêche de prévoir des trous non alignés par rapport au sens du débit du fluide 43, tant que les fenêtres 24 des transducteurs 38 sont, au moins en partie, en vis-à-vis.

Les baguettes 25, 32 de chaque transducteur 38 s'étendent à l'extérieur du tube 41 et sont connectées au système informatique 42 afin de relier ce dernier à l'empilement piézoélectrique. Ces baguettes 25, 32 permettent à la fois d'alimenter les transducteurs 38 et de transmettre des signaux électriques de mesure ou de commande.

Le système informatique 42 a au moins pour fonction de transmettre des signaux de commande à au moins un transducteur 38 et de recevoir des signaux de mesure venant d'au moins un transducteur 38. Lesdits signaux circulent ainsi à travers les baguettes 25, 32 et jusqu'à ou au sein de l'électrode 20 et jusqu'au plateau postérieur respectivement. De cette manière les électrodes peuvent dans un sens transmettre les signaux électriques de commande à une première plaquette piézoélectrique d'un premier transducteur. Cette dernière réagit et se déforme (contrainte mécanique) sous la contrainte du signal électrique reçu du fait de ses propriétés piézoélectriques. Cette contrainte mécanique se propage dans le fluide 43 sous forme d'ondes 53 ultrasonores. Ces ondes 53 atteignent une deuxième plaquette piézoélectrique d'un deuxième transducteur positionnée en vis-à-vis de la première plaquette piézoélectrique, et contraignent mécaniquement cette deuxième plaquette piézoélectrique. Cette contrainte mécanique permet à cette deuxième plaquette piézoélectrique de se polariser électriquement et ainsi de transmettre des signaux électriques, dit signaux de mesure, aux électrodes 20, 25 afin de les transmettre au système informatique 42.

La différence de temps entre les signaux de commande transmis à la première plaquette piézoélectrique et les signaux de mesures transmis à la deuxième plaquette piézoélectrique, correspond à la propagation de l'onde dans le fluide 43. Cette différence est donc liée à la vitesse du fluide et ainsi à son débit, qui peut être calculé par le système informatique 42. C'est donc en mesurant ces temps de propagation que le débit du fluide 43 est mesuré par le débitmètre. La distance séparant les deux transducteurs 38 est donc un paramètre important dans la mesure du débit du fluide 43. Elle ne doit pas être trop faible afin de permettre une mesure correcte du temps de propagation des ondes ultrasonores ; et ne doit pas être trop importante afin que le deuxième transducteur capte un signal non nul.

Les ondes 53 ultrasonores émises par un transducteur 38 sont plus directives avec une plus faible atténuation grâce à ladite fenêtre 24, audit plateau postérieur 35 et à la forme de ladite plaquette piézoélectrique 31. Pour les mêmes raisons ces ondes 53 ultrasonores sont aussi plus précises et plus fiables à leur réception par un transducteur 38. Ainsi dans un débitmètre selon l'invention la distance entre les deux transducteurs 38 peut être augmentée par rapport à un débitmètre comprenant des transducteurs de l'état de la technique. Le fait d'augmenter cette distance permet d'obtenir une mesure du débit plus précise puisqu'on réalise alors la mesure du temps de propagation des ondes ultrasonores sur une plus large plage de temps. Cette distance séparant deux transducteurs 38 dans un débitmètre selon l'invention est avantageusement comprise entre 1cm et 1m, et est par exemple de l'ordre de 5cm à 20cm.

De plus, ce mode de réalisation de l'invention permet de mesurer le débit du fluide 43 directement par les empilements piézoélectriques en regard des transducteurs 38 selon l'invention, la direction passant par les deux transducteurs 38 étant parallèle à l'axe du tube 41 et à la direction de l'écoulement. En conséquence la mesure est réalisée sans dispositif intermédiaire tel que des réflecteurs. En effet, un transducteur 38 selon l'invention présente un encombrement réduit, permettant son insertion dans le tube 41 tout en minimisant la perturbation de l'écoulement du fluide 43. Le débitmètre peut alors mesurer le débit du fluide 43 directement dans son sens d'écoulement. Le son étant plus rapidement transmis dans le sens de l'écoulement du fluide 43, cela permet d'augmenter la fiabilité ainsi que la rapidité de la mesure du débit. Ce mode de réalisation est particulièrement avantageux puisqu'il ne nécessite pas de dispositif intermédiaire tel que des réflecteurs et que les ondes ultrasonores se propagent parallèlement à la direction de l'écoulement et non avec un angle par rapport à cette dernière, ce qui améliore la sensibilité et/ou évite de réfléchir les ondes ultrasonores sur les parois du tube.

De plus, les transducteurs 38 étant directement insérés dans le tube 41, ils sont aussi directement en contact avec le fluide 43. Les matériaux qui forment les transducteurs 38, et en particulier les matériaux formant la coque externe doivent donc être résistants à la corrosion afin de procurer une durée de vie suffisante desdits transducteurs 38 et du débitmètre.

Dans une autre alternative au débitmètre représenté à la figure 5 d'un mode de réalisation selon l'invention, deux transducteurs 38 selon l'invention peuvent être utilisés pour former un débitmètre selon l'invention dans lequel le tube 41 et les coques externes de chaque transducteur forment une même et unique pièce. Dans ce mode de réalisation, ledit tube 41 comprend deux logements internes adaptés pour pouvoir recevoir chacun un empilement piézoélectrique de façon à former deux transducteurs selon l'invention. La résine synthétique liquide est alors injectée à l'intérieur de chacun de ces deux logements avant ou après insertion des empilements piézoélectriques.

D'autre part, les transducteurs 38 peuvent s'étendre selon une direction non parallèle à la direction longitudinale du tube 41 mais non nécessairement orthogonale à celle-ci, c'est-à-dire que les deux transducteurs 38 peuvent être placés en regard l'un de l'autre avec les fenêtres 24 en vis-à-vis, en formant un angle non nul mais inférieur à 90° par rapport à la direction selon laquelle s'écoule le fluide 43 (variante non représentée).

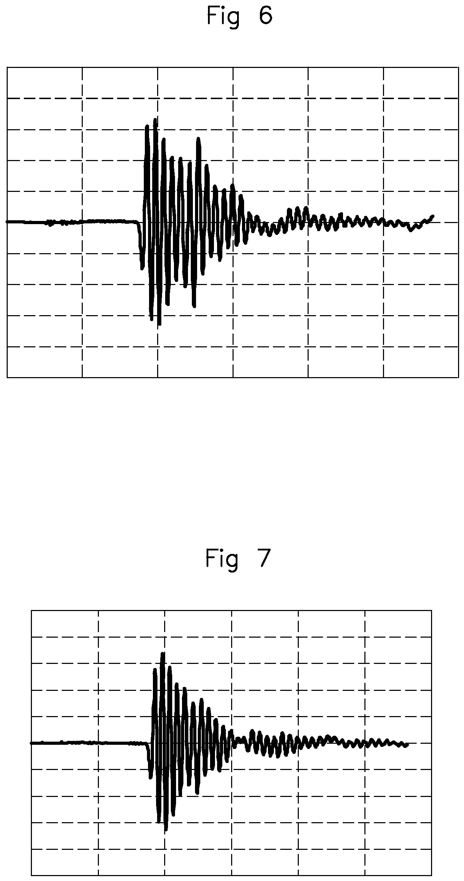

La figure 6 représente un signal (amplitude en mV en fonction du temps en ms) émis par un premier transducteur 38 et reçu par un deuxième transducteur 38 lorsque le liquide contenu dans le tube dans lequel est inséré le transducteur est à une température de 10°C. La figure 7 représente un signal (amplitude en mV en fonction du temps en ms) émis par un premier transducteur 38 et reçu par un deuxième transducteur 38 lorsque le liquide contenu dans le tube dans lequel est inséré le transducteur est à une température de 75°C. Comme on peut le voir sur chacune des figures 6 et 7, les premières périodes du signal présentent une amplitude maximale et sont dénuées de signaux parasites. En outre, en comparant les figures 6 et 7, on observe qu'une variation de température n'entraîne pas de changement dans l'allure du signal, en particulier l'allure des premières périodes du signal. Un transducteur selon l'invention est donc très peu sensible à la température ce qui est particulièrement avantageux pour de nombreuses utilisations, notamment dans des conduites d'eau, dont la température est susceptible de varier. En particulier, la mesure de débit de fluide à l'aide d'un transducteur selon l'invention est facilitée et beaucoup plus précise et fiable qu'avec un transducteur connu en ce que les premières périodes du début du signal émis ou reçu (à partir du premier franchissement du zéro de l'axe des ordonnées correspondant à l'amplitude du signal) sont de forte amplitude et permettent le calcul du débit du fluide, les ondes ultrasonores parasites étant retardées notamment grâce à la forte épaisseur du plateau postérieur 35, une épaisseur comprise entre trois et sept fois, et en particulier entre trois et cinq fois l'épaisseur de la plaquette piézoélectrique, étant en fait suffisante tout en limitant l'encombrement spatial du plateau postérieur et ainsi celui du transducteur ultrasonore. Le signal ultrasonore reçu peut donc être exploité pour en déduire la mesure du débit de fluide dès le premier franchissement du zéro de l'axe des ordonnées de façon fiable et sûre sans avoir à effectuer un tri parmi les premiers pics du signal. En particulier, la première période au moins du signal émis et reçu par le transducteur est toujours exploitable pour en déduire une mesure de fluide.

En outre, les inventeurs ont montré qu'un tel transducteur permet de réaliser des mesures fiables pour des débits de fluide très variables, notamment de 0,1L/mn à 4m³/h avec une erreur relative très faible (proche de zéro pour un débit inférieur 1L/mn et inférieure à 1% au-delà d' 1L/mn).

Dans un procédé de montage d'un tel transducteur 38 :
- on prépare d'abord ledit empilement piézoélectrique, puis
- on remplit l'intérieur de ladite coque externe 36 à l'aide d'une résine synthétique liquide,
- on insère ledit empilement piézoélectrique dans la coque externe 36 contenant ladite résine synthétique, et
- on réalise une étape de polymérisation de la résine polymère synthétique de façon à ce qu'après polymérisation, ladite résine enveloppe ledit empilement piézoélectrique de façon à maintenir les électrodes, la plaquette piézoélectrique et le plateau postérieur en contact mécanique et électrique les uns des autres.

Il n'est donc pas nécessaire d'utiliser des plots de maintien de la plaquette piézoélectrique à l'intérieur du transducteur pour assurer un maintien en position des éléments du transducteur.

Une fois polymérisée, la résine polymère disposée à l'intérieur de la coque externe permet de maintenir les électrodes, la plaquette piézoélectrique et le plateau postérieur en contact mécanique et électrique les uns des autres. Elle permet également d'assurer l'étanchéité autour de l'empilement piézoélectrique.

Dans le mode de réalisation représenté, la forme du transducteur 38 inséré dans un débitmètre est globalement cylindrique de révolution avec un diamètre hors tout aussi faible que possible, afin de minimiser les perturbations induites dans l'écoulement du fluide 43. Cependant rien n'empêche de réaliser un transducteur 38 d'une forme différente, par exemple optimisée du point de vue hydrodynamique (notamment au moins sensiblement en forme de goutte en section droite transversale) pour favoriser l'écoulement du fluide autour du transducteur 38.

Rien n'empêche d'utiliser un transducteur 38 dans d'autres applications qu'un débitmètre, par exemple dans un capteur de chaleur, un capteur de niveau, un capteur de distance, un capteur de position...

## Revendications

1. Transducteur ultrasonore (38) comprenant :
- au moins une plaquette piézoélectrique (31) présentant deux faces principales planes parallèles : une face frontale (48) et une face postérieure (49),
- au moins un plateau postérieur (35) présentant deux faces principales planes parallèles : une face antérieure (51) et une face arrière (52), la face antérieure (52) dudit plateau postérieur (35) s'étendant en regard et au contact de la face postérieure (49) de la plaquette piézoélectrique (31),
- le plateau postérieur (35) présente une épaisseur comprise entre trois et sept fois l'épaisseur de la plaquette piézoélectrique,
et **caractérisé en ce que** :
- le plateau postérieur (35) présente une impédance acoustique comprise entre 10MPa.s.m⁻¹ et 35MPa.s.m⁻¹.

2. Transducteur selon la revendication 1, **caractérisé en ce que** le plateau postérieur (35) est formé d'au moins un matériau adapté pour transmettre les ondes ultrasonores.

3. Transducteur selon l'une des revendications 1 ou 2, **caractérisé en ce que** le plateau postérieur (35) présente une impédance acoustique comprise entre 25MPa.s.m⁻¹ et 32MPa.s.m⁻¹.

4. Transducteur selon l'une des revendications 1 à 3, **caractérisé en ce que** la plaquette piézoélectrique (31) présente une impédance acoustique comprise entre 20MPa.s.m⁻¹ et 30MPa.s.m⁻¹, et en particulier de l'ordre de 25MPa.s.m⁻¹.

5. Transducteur selon l'une des revendications 1 à 4, **caractérisé en ce que** l'épaisseur de la plaquette piézoélectrique (31) est inférieure à 2mm, notamment de l'ordre de 500µm.

6. Transducteur selon l'une des revendications 1 à 5, **caractérisé en ce que** l'épaisseur du plateau postérieur (35) est comprise entre 1,5mm et 5mm, et en particulier entre 1,5mm et 3,5mm.

7. Transducteur selon l'une des revendications 1 à 6, **caractérisé en ce qu'**il comprend :
- une électrode frontale (20) à l'avant et au contact de la face frontale (48) de la plaquette piézoélectrique (31), ladite électrode frontale (20) étant électriquement reliée à l'extérieur du transducteur,
- une électrode postérieure (25) à l'arrière et au contact de la face arrière (52) du plateau postérieur (35), ladite électrode postérieure (25) étant électriquement reliée à l'extérieur du transducteur.

8. Transducteur selon la revendication 7, **caractérisé en ce qu'**il comprend une coque externe (36) présentant une paroi frontale s'étendant à l'avant de l'électrode frontale (20) et à l'avant de la face frontale (48) de la plaquette piézoélectrique (31), cette paroi frontale présentant une portion amincie, dite fenêtre (24), superposée à l'avant et en regard de l'électrode frontale (20) et de la face frontale (48) de la plaquette piézoélectrique (31).

9. Transducteur selon la revendication 8, **caractérisé en ce qu'**une résine synthétique (29) présentant une épaisseur supérieure ou égale à la moitié de l'épaisseur de la plaquette piézoélectrique (31) est disposée entre la plaquette piézoélectrique et la face interne de la fenêtre de la coque externe (36).

10. Procédé de montage d'un transducteur ultrasonore (38) dans lequel :
- on réalise au moins un empilement piézoélectrique comportant :
• au moins une plaquette piézoélectrique (31) présentant deux faces principales planes parallèles : une face frontale (48) et une face postérieure (49),
• au moins un plateau postérieur (35) présentant deux faces principales planes parallèles : une face antérieure (51) et une face arrière (52), la face antérieure (52) dudit plateau postérieur s'étendant en regard et au contact de la face postérieure (49) de la plaquette piézoélectrique (31),
• une électrode frontale (20) à l'avant et au contact de la face frontale (48) de la plaquette piézoélectrique (31), ladite électrode frontale (20) étant électriquement reliée à l'extérieur du transducteur,
• une électrode postérieure (25) à l'arrière et au contact de la face arrière (52) du plateau postérieur (35), ladite électrode postérieure (25) étant électriquement reliée à l'extérieur du transducteur,
- on dispose une résine synthétique liquide dans l'espace interne d'une coque externe (36) présentant une paroi frontale s'étendant à l'avant de l'électrode frontale (20) et à l'avant de la face frontale (48) de la plaquette piézoélectrique (31), cette paroi frontale présentant une portion amincie, dite fenêtre (24), superposée à l'avant et en regard de l'électrode frontale (20) et de la face frontale (48) de la plaquette piézoélectrique (31),
- après avoir disposé ladite résine synthétique liquide dans la coque externe, on insère ledit empilement piézoélectrique à l'intérieur de ladite coque externe remplie de ladite résine synthétique, ladite résine synthétique enveloppant ledit empilement piézoélectrique de façon à ce que, après solidification de la résine synthétique, les électrodes, la plaquette piézoélectrique (31) et le plateau postérieur (35) sont maintenus en position et en contact mécanique et électrique les uns avec les autres, et **caractérisé en ce que** :
- le plateau postérieur (35) présente une épaisseur comprise entre trois et sept fois l'épaisseur de la plaquette piézoélectrique,
- le plateau postérieur (35) présente une impédance acoustique comprise entre 10MPa.s.m⁻¹ et 35MPa.s.m⁻¹.

11. Procédé selon la revendication 10, **caractérisé en ce qu'**après avoir disposé ledit empilement piézoélectrique à l'intérieur de ladite coque externe (36), on réalise une étape de polymérisation de la résine synthétique liquide.

12. Débitmètre comprenant au moins un transducteur ultrasonore (38) -notamment deux transducteurs ultrasonore (38) en vis-à-vis- dans un écoulement de fluide (43) **caractérisé en ce que** chaque transducteur ultrasonore (38) est un transducteur (38) selon l'une des revendications 1 à 9.

## Patentansprüche

1. Ultraschallwandler (38), umfassend:
- mindestens ein piezoelektrisches Plättchen (31), das zwei parallele ebene Hauptseiten aufweist: eine Frontseite (48) und eine hintere Seite (49),
- mindestens eine hintere Platte (35), die zwei parallele ebene Hauptseiten aufweist: eine vordere Seite (51) und eine Rückseite (52), wobei sich die vordere Seite (52) der hinteren Platte (35) gegenüber und im Kontakt mit der hinteren Seite (49) des piezoelektrischen Plättchens (31) erstreckt,
- wobei die hintere Platte (35) eine Stärke aufweist, die zwischen dem Drei- und Siebenfachen der Stärke des piezoelektrischen Plättchens liegt,
und **dadurch gekennzeichnet, dass**:
- die hintere Platte (35) eine akustische Impedanz aufweist, die zwischen 10 MPa.s.m⁻¹ und 35 MPa.s.m⁻¹ liegt.

2. Wandler nach Anspruch 1, **dadurch gekennzeichnet, dass** die hintere Platte (35) von mindestens einem Material gebildet ist, das zur Übertragung der Ultraschallwellen geeignet ist.

3. Wandler nach einem der Ansprüche 1 oder 2, **dadurch gekennzeichnet, dass** die hintere Platte (35) eine akustische Impedanz aufweist, die zwischen 25 MPa.s.m⁻¹ und 32MPa.s.m⁻¹ liegt.

4. Wandler nach einem der Ansprüche 1 bis 3, **dadurch gekennzeichnet, dass** das piezoelektrische Plättchen (31) eine akustische Impedanz aufweist, die zwischen 20 MPa.s.m⁻¹ und 30 MPa.s.m⁻¹ liegt und insbesondere zirka 25 MPa.s.m⁻¹ beträgt.

5. Wandler nach einem der Ansprüche 1 bis 4, **dadurch gekennzeichnet, dass** die Stärke des piezoelektrischen Plättchens (31) geringer als 2 mm ist, insbesondere zirka 500 µm.

6. Wandler nach einem der Ansprüche 1 bis 5, **dadurch gekennzeichnet, dass** die Stärke der hinteren Platte (35) zwischen 1,5 mm und 5 mm und insbesondere zwischen 1,5 mm und 3,5 mm liegt.

7. Wandler nach einem der Ansprüche 1 bis 6, **dadurch gekennzeichnet, dass** er umfasst:
- eine frontale Elektrode (20) vorn und im Kontakt mit der Frontseite (48) des piezoelektrischen Plättchens (31), wobei die frontale Elektrode (20) außen mit dem Wandler elektrisch verbunden ist,
- eine hintere Elektrode (25) hinten und im Kontakt mit der Rückseite (52) der hinteren Platte (35), wobei die hintere Elektrode (25) außen mit dem Wandler elektrisch verbunden ist.

8. Wandler nach Anspruch 7, **dadurch gekennzeichnet, dass** er eine äußere Schale (36) umfasst, die eine Frontwand aufweist, die sich vorn an der frontalen Elektrode (20) und vorn an der Frontseite (48) des piezoelektrischen Plättchens (31) erstreckt, wobei diese Frontwand einen verschlankten, als Fenster (24) bezeichneten vorn übereinanderliegenden Abschnitt und gegenüber der frontalen Elektrode (20) und der Frontseite (48) des piezoelektrischen Plättchens (31) aufweist.

9. Wandler nach Anspruch 8, **dadurch gekennzeichnet, dass** ein synthetisches Harz (29), das eine Stärke von über oder gleich der Hälfte der Stärke des piezoelektrischen Plättchens (31) aufweist, zwischen dem piezoelektrischen Plättchen und der Innenseite des Fensters der äußeren Schale (36) angeordnet ist.

10. Verfahren zur Montage eines Ultraschallwandlers (38), wobei:
- mindestens ein piezoelektrischer Stapel hergestellt wird, aufweisend:
• mindestens ein piezoelektrisches Plättchen (31), das zwei parallele ebene Hauptseiten aufweist: eine Frontseite (48) und eine hintere Seite (49),
• mindestens eine hintere Platte (35), die zwei parallele ebene Hauptseiten aufweist: eine vordere Seite (51) und eine Rückseite (52), wobei sich die vordere Seite (52) der hintere Platte gegenüber und im Kontakt mit der hinteren Seite (49) des piezoelektrischen Plättchens (31) erstreckt,
• eine frontale Elektrode (20) vorn und im Kontakt mit der Frontseite (48) des piezoelektrischen Plättchens (31), wobei die frontale Elektrode (20) außen mit dem Wandler elektrisch verbunden ist,
• eine hintere Elektrode (25) hinten und im Kontakt mit der Rückseite (52) der hinteren Platte (35), wobei die hintere Elektrode (25) außen mit dem Wandler elektrisch verbunden ist,
- ein flüssiges synthetisches Harz im Innenraum einer äußeren Schale (36) angeordnet wird, aufweisend eine Frontwand, die sich vorn an der frontalen Elektrode (20) und vorn an der Frontseite (48) des piezoelektrischen Plättchens (31) erstreckt, wobei diese Frontwand einen verschlankten, als Fenster (24) bezeichneten vorn übereinanderliegenden Abschnitt und gegenüber der frontalen Elektrode (20) und der Frontseite (48) des piezoelektrischen Plättchens (31) aufweist,
- der piezoelektrische Stapel nach dem Anordnen des flüssigen synthetischen Harzes in der äußere Schale in das Innere der äußeren Schale, die mit dem synthetischen Harz gefüllt ist, eingesetzt wird, wobei das synthetische Harz den piezoelektrischen Stapel derart umgibt, dass die Elektroden, das piezoelektrische Plättchen (31) und die hintere Platte (35) nach Verfestigung des synthetischen Harzes in Position und in mechanischem und elektrischem Kontakt miteinander gehalten werden,
und **dadurch gekennzeichnet, dass**:
- die hintere Platte (35) eine Stärke aufweist, die zwischen dem Drei- und Siebenfachen der Stärke des piezoelektrischen Plättchens liegt,
- die hintere Platte (35) eine akustische Impedanz aufweist, die zwischen 10 MPa.s.m⁻¹ und 35 MPa.s.m⁻¹ liegt.

11. Verfahren nach Anspruch 10, **dadurch gekennzeichnet, dass** nach dem Anordnen des piezoelektrischen Stapels im Inneren der äußeren Schale (36) ein Polymerisationsschritt des flüssigen synthetischen Harzes durchgeführt wird.

12. Strömungsmesser, umfassend mindestens einen Ultraschallwandler (38) - insbesondere zwei einander gegenüberliegende Ultraschallwandler (38) - in einem Fluidstrom (43), **dadurch gekennzeichnet, dass** jeder Ultraschallwandler (38) ein Wandler (38) nach einem der Ansprüche 1 bis 9 ist.

## Claims

1. Ultrasonic transducer (38) comprising:
- at least one piezoelectric wafer (31) having two parallel planar main faces: a front face (48) and a posterior face (49),
- at least one posterior plate (35) having two parallel planar main faces: an anterior face (51) and a rear face (52), the anterior face (52) of said posterior plate (35) extending facing, and in contact with, the posterior face (49) of the piezoelectric wafer (31),
- the posterior plate (35) has a thickness between three and seven times the thickness of the piezoelectric wafer,
**characterised in that**:
- the posterior plate (35) has an acoustic impedance between 10 MPa.s.m⁻¹ and 35 MPa.s.m⁻¹.

2. Transducer according to claim 1, **characterised in that** the posterior plate (35) is formed of at least one material adapted to transmit ultrasound waves.

3. Transducer according to any one of claims 1 or 2, **characterised in that** the posterior plate (35) has an acoustic impedance between 25 MPa.s.m⁻¹ and 32 MPa.s.m⁻¹.

4. Transducer according to any one of claims 1 to 3, **characterised in that** the piezoelectric wafer (31) has an acoustic impedance between 20 MPa.s.m⁻¹ and 30 MPa.s.m⁻¹, and in particular of the order of 25 MPa.s.m⁻¹.

5. Transducer according to any one of claims 1 to 4, **characterised in that** the thickness of the piezoelectric wafer (31) is less than 2 mm, especially of the order of 500 µm.

6. Transducer according to any one of claims 1 to 5, **characterised in that** the thickness of the posterior plate (35) is between 1.5 mm and 5 mm, and in particular between 1.5 mm and 3.5 mm.

7. Transducer according to any one of claims 1 to 6, **characterised in that** it comprises:
- a front electrode (20) at the front of, and in contact with, the front face (48) of the piezoelectric wafer (31), said front electrode (20) being electrically connected to the outside of the transducer,
- a posterior electrode (25) at the rear of, and in contact with, the rear face (52) of the posterior plate (35), said posterior electrode (25) being electrically connected to the outside of the transducer.

8. Transducer according to claim 7, **characterised in that** it comprises an outer shell (36) having a front wall extending in front of the front electrode (20) and in front of the front face (48) of the piezoelectric wafer (31), this front wall having a thinned-down portion, named window (24), superimposed in front of, and facing, the front electrode (20) and the front face (48) of the piezoelectric wafer (31).

9. Transducer according to claim 8, **characterised in that** a synthetic resin (29) having a thickness greater than or equal to half the thickness of the piezoelectric wafer (31) is disposed between the piezoelectric wafer and the inner face of the window of the outer shell (36).

10. Method for assembling an ultrasonic transducer (38) in which:
- at least one piezoelectric stack is produced comprising:
• at least one piezoelectric wafer (31) having two parallel planar main faces: a front face (48) and a posterior face (49),
• at least one posterior plate (35) having two parallel planar main faces: an anterior face (51) and a rear face (52), the anterior face (52) of said posterior plate extending facing, and in contact with, the posterior face (49) of the piezoelectric wafer (31),
• a front electrode (20) at the front of, and in contact with, the front face (48) of the piezoelectric wafer (31), said front electrode (20) being electrically connected to the outside of the transducer,
• a posterior electrode (25) at the rear of, and in contact with, the rear face (52) of the posterior plate (35), said posterior electrode (25) being electrically connected to the outside of the transducer,
- a liquid synthetic resin is disposed in the internal space of an outer shell (36) having a front wall extending in front of the front electrode (20) and in front of the front face (48) of the piezoelectric wafer (31), this front wall having a thinned-down portion, named window (24), superimposed in front of, and facing, the front electrode (20) and the front face (48) of the piezoelectric wafer (31),
- after having disposed said liquid synthetic resin in the outer shell, said piezoelectric stack is inserted inside said outer shell filled with said synthetic resin, said synthetic resin enclosing said piezoelectric stack so that, after the synthetic resin has solidified, the electrodes, the piezoelectric wafer (31) and the posterior plate (35) are held in position and in mechanical and electrical contact with each other,
and **characterised in that**:
- the posterior plate (35) has a thickness between three and seven times the thickness of the piezoelectric wafer,
- the posterior plate (35) has an acoustic impedance between 10 MPa.s.m⁻¹ and 35 MPa.s.m⁻¹.

11. Method according to claim 10, **characterised in that** after having disposed said piezoelectric stack inside said outer shell (36), a step of polymerising the liquid synthetic resin is carried out.

12. Flowmeter comprising at least one ultrasonic transducer (38) - especially two ultrasonic transducers (38) facing each other - in a flow of fluid (43), **characterised in that** each ultrasonic transducer (38) is a transducer (38) according to any one of claims 1 to 9.
